# EUROPÄISCHE PATENTSCHRIFT

(11) **EP 0 411 086 B1**
(45) Veröffentlichungstag und Bekanntmachung des Hinweises auf die Patenterteilung: **10.08.1994**
(21) Anmeldenummer: 90902752.6
(22) Anmeldetag: 19.02.1990
(51) Int. Cl.: H04N 1/393

(54) **VIDEO-DESKTOP-KAMERA**
VIDEO DEKSTOP CAMERA
CAMERA VIDEO DE BUREAU

(30) Priorität: 20.02.1989 AT 374/89
(43) Veröffentlichungstag der Anmeldung: 06.02.1991
(73) Patentinhaber: 4YOU SOFTWARE ENTWICKLUNGS- UND VERTRIEBSGESELLSCHAFT M.B.H., A-4910 Ried im Innkreis (AT)
(72) Erfinder: KÜHBERGER, Franz, A-4906 Eberschwang (AT)
(74) Vertreter: Köhler-Pavlik, Johann, Dipl.-Ing.
(86) Internationale Anmeldenummer: AT9000017
(87) Internationale Veröffentlichungsnummer: WO9009717

(56) Entgegenhaltungen:
- EP-A- 0 105 213
- EP-A- 0 218 291
- DE-A- 3 809 677
- GB-A- 2 096 492
- US-A- 4 633 306
- PATENT ABSTRACTS OF JAPAN, vol. 11, no. 122 (E-500) (2569), 16 April 1987; & JP-A-61269565
- REVIEW OF THE ELECTRICAL COMMUNICATION LABORATORIES, vol. 33, no. 2, March 1985 (Tokyo, JP) G. Suzuki et al.: "Tele-document terminal electronic filing terminal for INS model system-" pages 284-292

## Beschreibung

Die Erfindung betrifft ein Verfahren zur Verarbeitung von Bildinformationen in einer Videokamera, insbesondere in einem Video-Publishing-System, sowie eine Video-Desktop-Kamera zur Durchführung des Verfahrens.

Die Verarbeitung der Bildinformation in herkömmlichen Videokameras umfaßt das optische Abbilden eines Gegenstandes od.dgl., auf einem Bildsensor, das zeilenweise Abtasten des Bildsensors mittels eines Scanners, das computergesteuerte Digitalisieren der vom Scanner gelieferten Bildinformation und die computergesteuerte Abspeicherung der digitalisierten Daten auf einem austauschbaren Speichermedium in der Kamera.

Zu diesem Zweck sind die üblichen Kameras mit optisch-elektronishchen Systemen, umfassend Linsenanordnungen mit Stelleinrichtungen, Einrichtungen zur Einstellung aller Aufnahmeparameter und zur Bilderzeugung, Einrichtung zur Umwandlung des Bildes in elektrische Signale und einem Scanner zur zeilenweisen Abtastung dieser Einrichtung, Analog/Digital-Wandler und einem Laufwerk für ein Speichermedium zur Aufzeichnung der Bildinformation ausgestattet, siehe hier JP-A-61 269 565, worauf der Oberbegriff der verabhängigen Ansprüche 1 und 4 beruht.

In immer steigendem Ausmaß nimmt die Verwendung von Personal Computern zur Verarbeitung und Aufbereitung von zur Publikation bestimmtem Material zu (Desktop Publishing). Vor allem im Zeitungsbereich, aber auch für die Erstellung von Katalogen, Paßfotos usw. wird diese Anwendung von Computern zunehmend wichtiger.

Dabei sollen auch Bilder in die Verarbeitung miteinbezogen werden. Dazu müssen sie aber dem Computer in lesbarer Form, d.h. in Form digitaler elektrischer Signale in genau definierten Aufzeichnungs- und auch Dateiformaten, vorliegen.

Derzeit müssen Bilder, die mit einem Desktop-Publishing System verarbeitet werden sollen, über einen mit dem Computer verbundenen Scanner oder das Bild einer herkömmlichen Videokamera über Video-Digitizer eingelesen werden.

Diese Verfahren erfordern nun vermehrten apparativen Aufwand, wodurch sie aufwendiger durchzuführen, sehr zeitintensiv und auch teuer sind. Darüberhinaus sind etliche Zwischenschritte, d.h. Übertragungsvorgänge von verschiedenen Geräten bzw. Speichermedien auf andere Geräte oder Speichermedien, notwendig, wobei jeder Schritt zu einer mehr oder weniger großen Qualitätseinbuße führt. Das schließlich im Speicher des Computers repräsentierte Bild hat somit aufgrund der sich summierenden Verzchlechterungen erheblich geringere Qualität als das erste aufgenommene Bild.

Die Aufgabe der vorliegenden Erfindung ist es nun, ein Verfahren bereitzustellen, das erlaubt, auf rasche, einfache Weise Bilder in der für das Desktop-Publishing erforderlichen digitalisierten Form auf einem für Personal Computer direkt lesbaren Informationsträger in dafür üblichen Daten- und Dateiformaten zur Verfügung zu stellen.

Zur Lösung dieser Aufgabe ist bei dem einleitend beschriebenen Verfahren erfindungsgemäß vorgesehen, daß vor oder zwischen dem optischen Abbilden und dem Auslesen des Bildsensors die Stellung eines Bedienungselementes für die Bildgröße bzw. den Abbildungsmaßstab abgefragt wird, und daß vor oder zwischen dem Digitalisieren und der Abspeicherung die Stellung eines weiteren Bedienungselementes für das elektronische Datenformat, wie z. B. das GEM- , Paintbrush- , PCX- oder TIF-Format, abgefragt und die Bildinformation entsprechend den Stellungen der Bedienungselemente computergesteuert elektronisch formatiert und abgespeichert wird.

Dieses Verfahren beinhaltet also eine dem eigentlichen Desktop-Publishing vorausgehende Vorverarbeitung schon bei der Aufnahme der Bilder. Daraus ergibt sich eine wesentliche Zeitersparnis von rund einer bis zu drei Stunden, was im Verlags- und Zeitungswesen einen großen Vorteil bedeutet. Diese Zeitersparnis, erreicht durch das Entfallen der konventionellen (photographischen oder videographischen) Bilderzeugung, der Umkopier- und externen Bearbeitungsvorgängen, geht aber auch Hand in Hand mit einer beachtlichen Qualitätsverbesserung der publizierten Bilder, da ja jeder Umkopiervorgang, wie schon erwähnt, die Qualität beeinträchtigt.

Zur Durchführung dieses erfindungsgemäßen Verfahrens ist eine Videokamera der eingangs beschriebenen Art gemäß einem weiteren Merkmal der Erfindung dadurch gekennzeichnet, daß die Kamera mit zumindest einem Bedienungselement (10, 10') zur Einstellung der Bildgröße und/oder des Abbildungsmaßstabes und/oder zur Wahl eines elektronischen Datenformates, einem Laufwerk (7) für ein bei Standard Personal Computern übliches, austauschbares Speichermedium (8) sowie einem Mikrorechner (9), welcher mit jedem Bedienungselement (10, 10'), dem Analog/Digital-Wandler (6) und dem Laufwerk (7) verbunden ist und welcher Mikrorechner (9) ein Programm zur Abfrage der Stellung jedes Bedienungselementes (10, 10') und ein Verarbeitungs- bzw. Steuerprogramm enthält, das entsprechend der ermittelten Stellung der Bedienungselemente (10, 10') das optischelektronische System steuert, die Ausgangssignale des Analog/Digital-Wandlers (6) in ein für Standard Personal Computer lesbares elektronisches Datenformat, wie z. B. das GEM- , Paintbrush-, PCX- oder TIF-Format, umwandelt und das Laufwerk (7) zur Abspeicherung der derart erhaltenen, digitalisierten und formatierten Daten auf dem Speichermedium (8) in einem bei Standard Personal Computern üblichen Dateiformat ansteuert.

Man erhält ein kompaktes Gerät, welches leicht und einfach zu bedienen ist und von dem das Speichermedium, vorzugsweise Datendisketten oder Streamer-Bänder, direkt einem Standard Personal Computer lesbar sind, ohne über zusätzliche Anlagen überspielt werden zu müssen. Die sich daraus ergebenden Vorteile sind die gleichen wie die zuvor angeführten.

Die Erfindung soll nun unter Bezugnahme auf die beigefügten Zeichnungen in der nachfolgenden Beschreibung näher erläutert werden.

Dabei zeigt
- Fig. 1: ein Schema des erfindungsgemäßen Verfahrens und
- Fig. 2: ein Schema eines Verfahrens gemäß einer vorteilhaften Abwandlung der Erfindung.

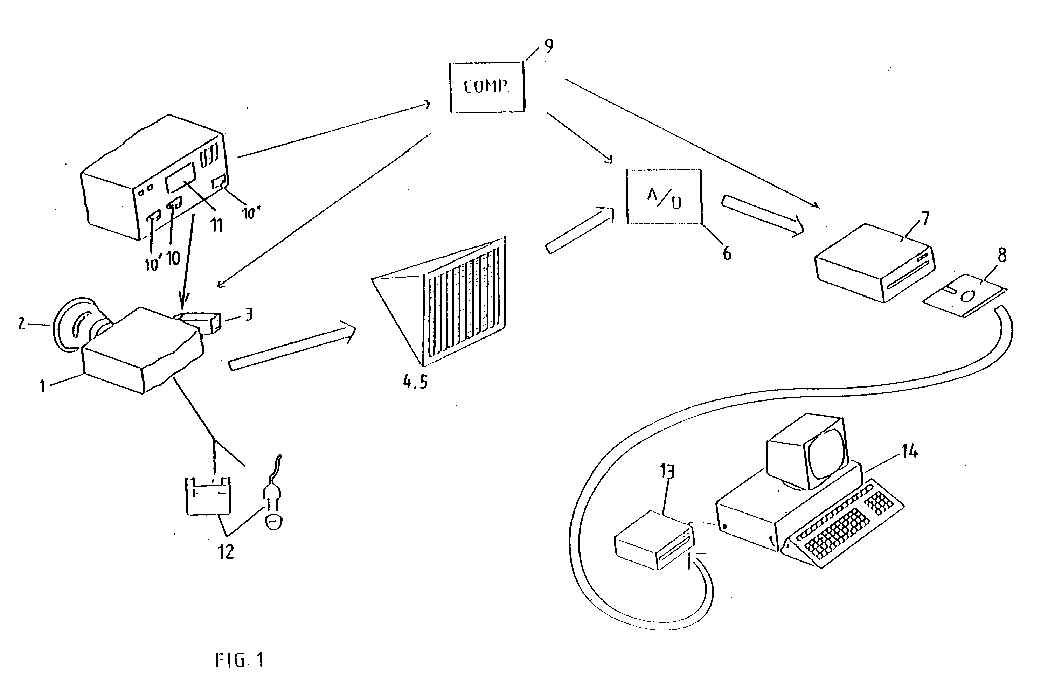

Zur Durchführung des Verfahrens gemäß der Erfindung ist die Kamera, wie in Fig. 1 gezeigt, mit einem optisch-elektronischen System 1 zur Bilderzeugung nach einer der bekannten Ausführungen ausgestattet, das die Einstellung bzw. Steuerung aller Aufnahmeparameter zuläßt oder auch selbsttätig übernehmen kann. Das betrifft z.B. die Verschlußzeit, Blende, Weißabgleich usw. bis zur Einstellung des Bildwinkels (Zoom-Objektiv 2) und der Entfernung, eventuell über ein bekanntes Autofokus-System. Das System 1 enthält vorteilhafterweise einen herkömmlichen Mikrocprozessor zur Steuerung.

Der aufzunehmende Gegenstand od.dgl. wird auf einen üblichen Bildsensor 4, z.B. eine sogenannte CCD (charge coupled device) in der Kamera abgebildet und der Bildsensor 4 seinerseits von einem Scanner 5 der Kamera zeilenweise abgetastet. Danach werden die Scannersignale in einem Analog/Digital-Wander 6 digitalisiert und auf ein in einem Laufwerk 7 der Kamera befindliches, austauschbares und vorzugsweise wiederverwendbares Speichermedium 8 abgespeichert.

Dieser Fluß der Bildinformation ist in den Abbildungen durch die dicken Pfeile symbolisiert, während die nachfolgend beschriebenen Steuereinflüsse durch einfache Pfeile angedeutet sind.

Vor oder zwisdhen dem optischen Abbilden und dem zeilenweisen Abtasten des Bildsensors 4 durch den Scanner 5 wird gemäß der Erfindung ein Wert für die Bildgröße bzw. den Abbildungsmaßstab des Bildes eingestellt. Zu diesem Zweck ist ein Mikrorechner 9 mit zumindest einem Bedienungselement 10 verbunden und enthält ein Programm zur Abfrage dieses Bedienungselementes 10. Die aktuelle Stellung des Bedienungselementes 10 wird einem Verarbeitungs- und Steuerprogramm im Mikrorechner 9 übermittelt und dieser wirkt nun, zusätzlich zu den Einflüssen des schon in herkömmlichen Kameras üblichen Mikroprozessors, ebenfalls steuernd auf das optisch-elektronische System 1 der Kamera ein. Wie durch den strichlierten Pfeil zum Bildsensor 4 und Scanner 5 angedeutet, kann der Mikrorechner 9 auch beim zeilenweisen Abtasten des Bildsensors 4 steuernd eingreifen und somit eine weitere Bearbeitung der Bildinformation gestatten.

Gemäß dem zweiten wesentlichen Merkmal des erfindungsgemäßen Verfahrens wird als weiterer Schritt vor oder zwischen dem Digitalisieren der Daten des Scanners 5 und dem Abspeichern der digitalisierten Daten eine von mehreren möglichen, für Standard Personal Computer direkt lesbaren, Datenformatierungen, wie z.B. GEM-Format, Paintbrush-Format, PCX, TIF usw. eingestellt. Dazu wird, wie zuvor schon beschrieben, die Stellung eines Bedienungselementes 10', gegebenenfalls identisch mit dem zuvor genannten Element 10, mittels eines Abfrageprogrammes im Mikrorechner 9 abgefragt und dem Verarbeitungs- und Steuerprogramm übermittelt. Entsprechend der aktuellen Stellung des Bedienungselementes 10' wandelt das Verarbeitungsprogramm des Mikrorechners die Ausgangsdaten des Analog/Digital-Wandlers 6 in das gewählte Format um und steuert schließlich das Laufwerk 7 der Kamera, sodaß die digitalisierten und formatierten Daten auf dem Speichermedium 8 in einem für Standard Personal Computer üblichen Dateiformat abgespeichert werden.

Das Speichermedium 8 muß selbstverständlich ein bei Standard Personal Computern übliches Medium und das Laufwerk 7 der Kamera muß dementsprechend ausgestaltet sein. Vorzugsweise werden die handelsüblichen Datendisketten mit 3 1/2 Zoll Durchmesser und einer Speicherkapazität von 720 kByte oder 1,44 MByte verwendet. Jedoch ist auch die Verwendung von Streamer-Bändern mit bis zu 40 MByte Speicherkapazität und weiter verkürzter Zugriffszeit oder Disketten abweichender Formate, etwa 2, 2 1/2 oder 5 1/4 Zoll, denkbar.

Gemäß einem weiteren Merkmal der Erfindung sind alle diese Abfragen über Anzeigen im Sucher 3 und bzw. oder auf einer LCD-Anzeige 11 am Gehäuse der Kamera signalisiert, wo allenfalls auch die Aufnahmeparameter aufscheinen können.

Die eigentliche Aufnahme erfolgt nach Betätigung eines weiteren Bedienungselementes 10'', worauf die soeben beschriebenen Vorgänge stattfinden, und der Kameracomputer 9 steuert die Speicherung im gewählten Format, wobei je nach Speicherkapazität des Speichermediums 8, ein oder mehrere Bilder aufgezeichnet werden können. Auf den vorzugsweise verwendeten Disketten haben zwischen 5 und 20 Bilder pro Diskette Platz haben. Um ein möglichst breites Anwendungsgebiet zu erzielen, ist zur Stromversorgung 12 sowohl der Netzbetrieb als auch der Betrieb mittels Accus möglich, welche wiederum in die Kamera integriert oder als externer Batteriepack ausgeführt sein können.

Mit der Kamera nach der erfindungsgemäßen Ausführung wird das Arbeiten im Video-Bereich wesentlich vereinfacht. Es wird nur mehr die Kamera verwendet. Sind die Bilder fertig, d.h. gespeichert, muß nur mehr das Speichermedium 8 in das Laufwerk 13 des Computers 14 eingelegt werden und das Bild steht für das Desktop-Publishing zur Verfügung.

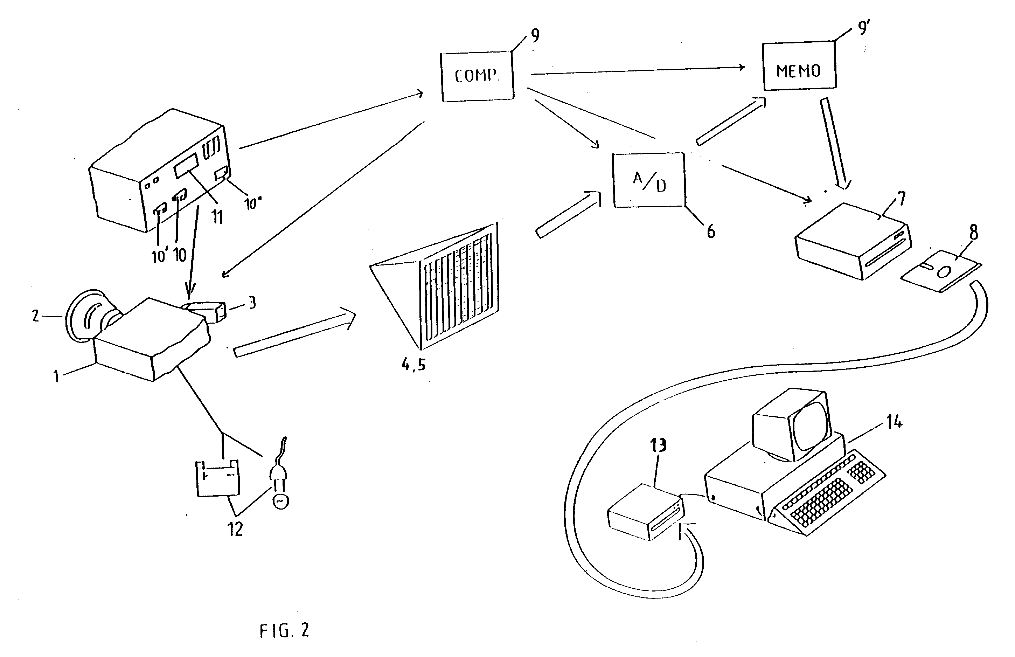

Eine andere Variante des erfindungsgemäßen Verfahrens ist durch das Schema der Fig. 2 charakterisiert. Gleiche Bauteile sind gleich bezeichnet wie in Fig. 1.

Die Bildinformation wird nach der Digitalisierung im Analog/Digital-Wandler 6 und vor der Abspeitherung auf das Speichermedium 8 in einen Zwischenspeither 9' der Kamera übertragen. Dieser ist mit dem Mikrorechner 9 der Kamera verbunden, sodaß zwischen dem Auslesen der Daten aus dem Zwischenspeicher und der Formatierung die Bildparameter, wie z.B. Größe, Ausschnitt, Helligkeit, Farbe etc. entsprechend vorgewählten Einstellungen bestimmter Bedienungselemente, welche mit den Bedienungselementen 10,10' identisch sein können, verändert werden können. Erst nach diesem weiteren Bearbeitungsschritt werden die zwischengespeicherten Daten über das Laufwerk 7 auf das Speichermedium 8 ausgelesen.

## Patentansprüche

1. Verfahren zur Verarbeitung von Bildinformation in einer Videokamera, insbesondere in einem Desktop-Publishing-System, umfassend das optische Abbilden eines Gegenstandes od. dgl. auf einem Bildsensor, das zeilenweise Abtasten und Auslesen des Bildsensors, das computergesteuerte Digitalisieren der vom Bildsensor kommenden, ausgelesenen Bildinformation und die computergesteuerte Abspeicherung der digitalisierten Daten auf einem austauschbaren Speichermedium in der Kamera, dadurch gekennzeichnet, daß vor oder zwischen dem optischen Abbilden und dem Auslesen des Bildsensors die Stellung eines Bedienungselementes für die Bildgröße bzw. den Abbildungsmaßstab abgefragt wird, und daß vor oder zwischen dem Digitalisieren und der Abspeicherung die Stellung eines weiteren Bedienungselementes für das elektronische Datenformat, wie z. B. das GEM- , Paintbrush- , PCX- oder TIF-Format, abgefragt und die Bildinformation entsprechend den Stellungen der Bedienungselemente computergesteuert elektronisch formatiert und abgespeichert wird.

2. Verfahren nach Anspruch 1, dadurch gekennzeichnet, daß die Bildinformation nach der Digitalisierung und vor der Abspeicherung auf das Speichermedium in einen Zwischenspeicher übergeben wird und zwischen dem Auslesen der Bildinformation aus dem Zwischenspeicher und der elektronischen Formatierung der Daten die Stellung zumindest eines weiteren Bedienungselementes für die Bildparameter, wie z. B. die Größe, Bildausschnitt, Helligkeit, Farbe, etc., abgefragt wird und die Bildinformation entsprechend den Stellungen der Bedienungselemente computergesteuert elektronisch formatiert und abgespeichert wird.

3. Verfahren nach Anspruch 1 oder 2, dadurch gekennzeichnet, daß jede durch die Abfrage ermittelte Stellung eines Bedienungselementes im Sucher der Kamera oder auf separaten Anzeigen am Gehäuse der Kamera signalisiert werden.

4. Videokamera mit bekanntem optisch-elektronischem System zur Einstellung der Aufnahmeparameter und zur Bilderzeugung, einem Bildsensor zur Umwandlung der Bildinformation in elektrische Signale, Einrichtungen zum zeilenweisen Auslesen des Bildsensors, einem Analog/Digital-Wandler und einem Laufwerk für ein Speichermedium zur Aufzeichnung der digitalisierten Bildinformation, dadurch gekennzeichnet, daß die Kamera mit zumindest einem Bedienungselement (10,10') zur Einstellung der Bildgröße und/oder des Abbildungsmaßstabes und/oder zur Wahl eines elektronischen Datenformates, einem Laufwerk (7) für ein bei Standard Personal Computern übliches, austauschbares Speichermedium (8) sowie einem Mikrorechner (9), welcher mit jedem Bedienungselement (10, 10'), dem Analog/Digital-Wandler (6) und dem Laufwerk (7) verbunden ist und welcher Mikrorechner (9) ein Programm zur Abfrage der Stellung jedes Bedienungselementes (10, 10') und ein Verarbeitungs- bzw. Steuerprogramm enthält, das entsprechend der ermittelten Stellung der Bedienungselemente (10, 10') das optischelektronische System steuert, die Ausgangssignale des Analog/Digital-Wandlers (6) in ein für Standard Personal Computer lesbares elektronisches Datenformat, wie z. B. das GEM- , Paintbrush- , PCX- oder TIF-Format, umwandelt und das Laufwerk (7) zur Abspeicherung der derart erhaltenen, digitalisierten und formatierten Daten auf dem Speichermedium (8) in einem bei Standard Personal Computern üblichen Dateiformat ansteuert.

5. Kamera nach Anspruch 4, dadurch gekennzeichnet, daß ein Zwischenspeicher zum Ablegen der digitalisierten Bildinformation vorgesehen ist, der mit dem Mikrorechner (9) der Kamera verbunden ist und in dem die Ausgangssignale des Analog/Digital-Wandlers (6) sowie die vom Mikrorechner (9) umgewandelten Daten vor der Abspeicherung auf das Speichermedium (8) zwischenspeicherbar sind.

6. Kamera nach Anspruch 4 oder 5, dadurch gekennzeichnet, daß das Laufwerk (7) der Kamera für die Benützung handelsüblichen Datendisketten für Personal Computer, vorzugsweise 3½-Zoll Datendisketten mit 720 KB oder 1,44 MB Speicherkapazität, ausgebildet ist.

7. Kamera nach Anspruch 4 oder 5, dadurch gekennzeichnet, daß das Laufwerk (7) der Kamera für die Benützung eines handelsüblichen Streamerbandes mit einer Speicherkapazität von bis zu 40 MB ausgebildet ist.

8. Kamera nach einem der Ansprüche 4 bis 7, dadurch gekennzeichnet, daß Anzeigen im Sucher (3) und bzw. oder eine LCD-Anzeige (11) am Gehäuse der Kamera zur Signalisierung der Stellung jedes Bedienungselementes (10, 10') und allenfalls zur Ausführungsbestätigung der durchzuführenden Operationen vorgesehen und mit dem Mikrorechner (9) der Kamera verbunden sind.

## Claims

1. A method of processing visual information in a video camera, in particular in a desktop publishing system, comprising the optical imaging of an object or the like on an image sensor, the line-by-line scanning and reading of the image sensor, the computer-controlled digitisation of the visual information read from the image sensor and the computer-controlled storage of the digitised data on an exchangeable storage medium in the camera, characterised in that the position of a control element for the size or scale of the image is, interrogated before or between the optical imaging and the reading of the image sensor, and in that the position of a further control element for the electronic data format, e.g. GEM, paintbrush, PCX or TIF format, is interrogated before or between digitisation and storage and the visual information is electronically formatted and stored by computer control according to the positions of the control elements.

2. A method according to claim 1, characterised in that, after digitisation and before storage on the storage medium, the visual information is consigned to an intermediate store, and between reading the visual information from the intermediate store and the electronic formatting of the data, the position of at least one further control element for the image parameters such as size, image area, brightness, colour, etc. is interrogated and the visual information is electronically formatted and stored by computer control according to the positions of the control elements.

3. A method according to claim 1 or 2, characterised in that each position of a control element as determined by the interrogation is signalled in the viewfinder of the camera or on separate displays on the housing of the camera.

4. A video camera having a known opto-electronic system for adjusting the recording parameters and for generating an image, an image sensor for conversion of the visual information into electrical signals, devices for the line-by-line reading of the image sensor, an analogue/digital converter and a drive for a storage medium for recording thee digitised visual information, characterised in that the camera [is provided] with at least one control element (10, 10') for adjusting the size and/or scale of the image and/or for selecting an electronic data format, a drive (7) for an exchangeable storage medium (8) usual in standard personal computers, and a microcomputer (9) which is connected to each control element (10, 10'), the analogue/digital converter (6) and the drive (7) and which contains a program for interrogating the position of each control element (10, 10') and a processing or control program which controls the opto-electronic system according to the determined position of the control elements (10, 10'), converts the output signals of the analogue/digital converter (6) into an electronic data format readable by standard personal computers, e.g. GEM, paintbrush. PCX or TIF format, and actuates the drive (7) for storing the thus obtained, digitised and formatted data on the storage medium (8) in a data format usual in standard personal computers.

5. A camera according to claim 4, characterised in that an intermediate store is provided for depositing the digitised visual information and is connected to the microcomputer (9) of the camera, in which intermediate store the output signals of the analogue/digital converter (6) and the data converted by the microcomputer (9) can be temporarily stored before being stored on the storage medium (8).

6. A camera according to claim 4 or 5, characterised in that the drive (7) of the camera is designed for the use of standard floppy disks for personal computers, preferably 3½ inch floppy disks with a storage capacity of 720 KB or 1.44 MB.

7. A camera according to claim 4 or 5, characterised in that the drive (7) of the camera is designed for the use of a standard streamer tape with a storage capacity of up to 40 MB.

8. A camera according to any one of claims 4 to 7, characterised in that displays in the viewfinder (3) and/or an LCD display (11) on the housing of the camera are provided for signalling the position of each control element ( 10, 10') and, if necessary, for confirming execution of the operations to be performed, and are connected to the microcomputer (9) of the camera.

## Revendications

1. Procédé pour le traitement d'informations d'images dans une caméra vidéo, en particulier dans un système de publication assistée par ordinateur, comprenant la reproduction optique d'un objet ou similaire sur un capteur d'images, le balayage linéaire et la lecture du capteur d'images, la numérisation par ordinateur des informations lues et fournies par le capteur d'images, et la mémorisation sur ordinateur des données numériques sur une unité de stockage interchangeable dans la caméra, caractérisé en ce qu'avant ou entre la reproduction optique et la lecture du capteur d'images, la position d'un élément de commande est interrogée pour la dimension de l'image resp. l'échelle de reproduction, et qu'avant ou entre la numérisation et la mémorisation, la position d'un autre élément de commande est interrogée pour le format électronique des données, comme par exemple le format GEM, Paintbrush, PCX ou TIF et que l'information d'images est formatée électroniquement par programme d'ordinateur en fonction des positions des éléments de commande et est mémorisée.

2. Procédé selon la revendication 1, caractérisé en ce que l'information d'images, après la numérisation et avant la mémorisation sur l'unité de stockage est transmise à une mémoire intermédiaire et qu'entre la lecture de l'information d'images provenant de la mémoire intermédiaire et le formatage électronique des données, la position d'au moins un autre élément de commande est interrogée pour un paramètre d'images, tel que par exemple la dimension, la coupe, la luminosité, la couleur, etc. et que l'information d'images est formatée électroniquement par programme d'ordinateur en fonction des positions des éléments de commande et est mémorisée.

3. Procédé selon la revendication 1 ou 2, caractérisé en ce que chaque position d'un élément de commande, déterminée par l'interrogation, est signalisée dans le viseur de la caméra ou sur des affichages séparés sur le boitier de la caméra.

4. Caméra vidéo avec un système connu optique électronique pour le réglage des paramètres de prise de vue et pour la production d'images, un capteur d'images pour la conversion de l'information d'images en signaux électriques, des dispositifs pour la lecture linéaire du capteur d'images, un convertisseur analogique/numérique et un lecteur pour une unité de stockage pour l,enregistrement des informations d'images numérisées, caractérisée en ce que la caméra, à l'aide d'au moins un élément de commande (10, 10') pour le réglage de la dimension de l'image et/ou l'échelle de reproduction et/ou pour la sélection d'un format de données électroniques, d'un lecteur (7) pour une unité de stockage (8) interchangeable courante sur les ordinateurs personnels standard, ainsi qu'à l'aide d'un micro-ordinateur (9) qui est relié à chaque élément de commande (10, 10') au convertisseur analogique/numérique (6) et au lecteur (7) et lequel micro-ordinateur (9) comprend un programme pour l'interrogation de la position de chaque élément de commande (10, 10') et un programme de commande resp. de traitement qui commande le système optique électronique en fonction de la position déterminée des éléments de commande (10, 10'), convertit les signaux de sortie du convertisseur analogique/numérique (6) en un format de données électroniques lisibles pour un ordinateur personnel standard, tel que par exemple le format GEM, Paintbrush, PCX ou TIF, et actionne le lecteur (7) pour la mémorisation des données ainsi obtenues, formatées et numérisées sur l'unité de stockage (8) dans un format de fichier courant dans les ordinateurs personnels standards.

5. Caméra selon la revendication 4, caractérisée en ce qu'il est prévu une mémoire intermédiaire, pour le dépôt des informations d'images numérisées, qui est reliée au microordinateur (9) de la caméra et dans laquelle sont stockés provisoirement les signaux de sortie du convertisseur analogique/numérique (6) ainsi que les données converties par le micro-ordinateur (9) avant la mémorisation sur l'unité de stockage (8).

6. Caméra selon la revendication 4 ou 5, caractérisée en ce que le lecteur (7) de la caméra est conçu pour l'utilisation de disquettes de données, courantes dans le commerce, pour les ordinateurs personnels, de préférence des disquettes de données de 3,5 pouces avec une capacité de mémoire de 720 KB ou 1,44 MB.

7. Caméra selon la revendication 4 ou 5, caractérisée en ce que le lecteur (7) de la caméra est conçu pour l'utilisation d'une bande à défilement en continu avec une capacité de mémoire jusqu'à 40 MB.

8. Caméra selon l'une des revendications 4 à 7, caractérisée en ce qu'il est prévu des affichages dans le viseur (3) et resp. ou un affichage LCD (11) sur le boîtier de la caméra pour la signalisation de la position de chaque élément de commande (10, 10') et dans tous les cas pour la confirmation d'exécution des opérations à effectuer et qu'ils sont reliés au micro-ordinateur (9) de la caméra.
